**Europäisches Patentamt**

**European Patent Office**

**Office européen des brevets**

(19)

(11) Numéro de publication: **0 247 926 B1**

## (12) FASCICULE DE BREVET EUROPEEN

(45) Date de publication de fascicule du brevet: **08.07.92**

(51) Int. Cl.⁵: **A23G 3/02**

(21) Numéro de dépôt: **87401111.7**

(22) Date de dépôt: **15.05.87**

(54) **Procédé et dispositif de préparation de pâte d'amande.**

(30) Priorité: **27.05.86 FR 8607573**

(43) Date de publication de la demande:
**02.12.87 Bulletin 87/49**

(45) Mention de la délivrance du brevet:
**08.07.92 Bulletin 92/28**

(84) Etats contractants désignés:
**CH DE ES FR GB IT LI NL SE**

(56) Documents cités:
| | |
|---|---|
| EP-A- 0 041 641 | EP-A- 0 140 729 |
| BE-A- 540 945 | BE-A- 567 739 |
| BE-A- 645 311 | CH-A- 551 157 |
| DE-A- 2 461 543 | DE-A- 3 435 363 |
| DE-B- 1 283 662 | DE-C- 477 472 |
| FR-A- 1 539 413 | FR-A- 2 229 436 |
| FR-A- 2 271 776 | US-A- 3 416 929 |

(73) Titulaire: **CLEXTRAL**
**1, rue du Colonel Riez**
**F-42700 Firminy(FR)**

(72) Inventeur: **Mange, Christian**
**4, rue Marcel Moltzer**
**F-42490 Fraisses(FR)**
Inventeur: **Allard, Georges**
**2, rue Marcel Sembat**
**F-42100 St-Etienne(FR)**

(74) Mandataire: **Polus, Camille et al**
**c/o Cabinet Lavoix 2, Place d'Estienne d'Or-**
**ves**
**F-75441 Paris Cedex 09(FR)**

## Description

La présente invention a pour objet un procédé de préparation de pâte d'amande à partir d'amandes entières émondées mélangées avec des glucides et divers additifs.

On sait que la fabrication de la pâte d'amande passe par la préparation d'une pâte mère d'amande qui est un produit résultant du broyage d'une certaine quantité d'amandes douces émondées associées notamment à du saccharose. Les différentes phases de broyage et les différents traitements nécessitent que cette pâte mère contienne un certain pourcentage d'eau.

La pâte mère d'amande contient donc les deux produits principaux : amande et saccharose ainsi qu'un certain pourcentage d'eau.

Ce produit prend le nom de pâte d'amande dès qu'il a été déshydraté jusqu'à contenir environ 10 % en poids d'eau. C'est à ce stade que sont rajoutés les différents éléments qui permettent de modifier tant la texture que le goût, que l'aspect ou même la durée de conservation.

En fonction des pourcentages de sucre incorporés, qui peuvent varier du tiers à trois-quarts de la quantité totale, on peut faire une distinction secondaire dans les qualités de pâtes d'amande qui sont dénommées soit pâtes d'amande pour confiserie, soit pâtes d'amande pour pâtisserie.

Généralement, la composition usuelle en confiserie de la pâte d'amande est la suivante :

Teneur minimale en huiles d'amande     17%
Teneur maximale en sucre     66%
Teneur maximale en humidité résiduelle

- pour une teneur en huiles d'amande comprise entre 17% et 22%     10%
- pour une teneur en huiles d'amande comprise entre 22 et 28%     12%
- pour une teneur en huiles d'amande supérieure à 28%     17%

Les huiles d'amande proviennent des amandes incorporées.

Il existe à l'heure actuelle deux procédés de fabrication qui peuvent être distingués, l'un dit procédé combiné de cuisson-broyage, et l'autre dit procédé d'évaporation-broyage.

Le premier procédé, appelé également procédé français, comporte plusieurs étapes indépendantes et parallèles.

Tout d'abord, on utilise des amandes émondées sèches qui sont d'abord rapées et ensuite soumises à un pré-broyage sur une broyeuse spéciale à cylindre dans le but de déchirer un grand nombre de cellules qui renferment l'huile d'amande et de manière à obtenir une pâte d'amande pure.

Parallèlement, les différents sucres, saccharose, sucre inverti et sirop de glucose sont mélangés avec une certaine quantité d'eau de manière à provoquer une dissolution directe, tandis qu'une phase de cuisson permet de réduire la quantité d'eau et d'obtenir la consistance de la pâte telle que nécessaire pour la fabrication.

Ensuite, les produits issus des deux étapes précédentes sont introduits dans un combiné-cuiseurmalaxeur avec tout d'abord une étape de malaxage suivie d'un refroidissement et d'un broyage. C'est au cours de cette étape que les différents parfums, alcools et autres additifs, ainsi que la quantité nécessaire de sucre inverti, afin d'obtenir les proportions souhaitées, sont rajoutés à ce mélange pour donner la pâte d'amande.

Le procédé d'évaporation-grillage, appelé également procédé allemand, est un procédé discontinu, mais avec toutes les étapes en série.

Les amandes blanches émondées sont mélangées avec du sucre cristallisé et pré-broyées, puis cet ensemble est soumis à un broyage. Ensuite, de l'eau est rajoutée ce qui va faciliter, lors du grillage, la réaction de Maillard développant ainsi la formation des matières arômatiques. Parallèlement, il se produit une évaporation d'une certaine quantité d'eau. Un refroidissement est alors nécessaire, réalisé généralement par un courant d'air froid, et le produit ainsi obtenu est appelé pâte mère d'amande. A cette pâte mère est adjoint du sucre glace, du sirop de glucose et autres additifs qui par mélange permettent d'obtenir la pâte d'amande.

Les différences entre ces deux procédés entraînent bien évidemment des variantes au niveau des propriétés rhéologiques et organoleptiques du produit fini. En effet, la teinte et le goût peuvent varier puisque la réaction de Maillard ne se développe pas dans les mêmes étapes et pas en présence des mêmes constituants.

Par ailleurs, les opérations d'arômatisation ou d'adjonction de produits d'addition peuvent être obtenues plus ou moins facilement dans l'un ou l'autre des procédés, et il apparaît clairement qu'il n'existe pas de différence fondamentale entre ces deux procédés, tous deux étant des dispositifs en série ou en parallèle mais discontinus.

Dans certaines fabrications de produits alimentaires, depuis longtemps, on a recherché des procédés et des dispositifs qui visent à se rapprocher le plus possible de procédés dits "continus".

A cet effet, on connaît dans le FR-A-2.257.235, une machine à traiter ou fabriquer des produits alimentaires par exemple de la pâte d'amande et dont le but est de limiter les nombreuses pertes de temps dues à l'obligation de passer d'un appareil à un autre.

Cette machine comprend essentiellement, avec la cuve de traitement des matières premières, deux bacs à liquide dont l'un avec un appareil de chauffage permettant d'amener le liquide à la température d'utilisation maximum, et dont l'autre avec un appareil frigorifique permettant d'amener le liquide à basse température, et pour chaque bac, une pompe de circulation aspirant le liquide.

On connaît également dans le FR-A-2.331.966, un procédé pour la préparation de pâte à partir de graines de fruits à noyau, dans lequel les noyaux de fruit sont triés, lavés et décortiqués, éventuellement séchés et pilés avec du sucre et d'autres ingrédients à l'aide d'outils tournant très rapidement, après quoi cette pâte est grillée à une certaine température et est finalement refroidie. Pendant la phase de broyage elle-même, le produit reçoit suffisamment d'énergie pour que le mélange soit réalisé de façon intime, le chauffage étant effectué par injection directe de gaz chaud, de préférence de la vapeur d'eau.

L'invention a pour but un nouveau procédé qui permet de réaliser de façon continue et en un temps très court une pâte d'amande à partir d'amandes entières émondées.

L'invention a pour objet un procédé de préparation de pâte d'amande à partir d'amandes entières émondées mélangées avec des glucides et divers additifs, dans lequel l'ensemble de la préparation est réalisé par cuisson-extrusion à l'intérieur d'un transporteur à vis en plusieurs étapes se succèdant en continu et comprenant, de l'amont à l'aval dans le sens de transport, un mélange, une cuisson, une déshydratation et une extrusion, caractérisé en ce que les étapes comprennent :

- une introduction des amandes entières émondées, du saccharose associés à une certaine quantité d'eau, et un mélange des produits introduits,
- un premier broyage et malaxage du mélange avec une cuisson dudit mélange à une température comprise entre 140°C et 170°C permettant le développement des réactions biochimiques de Maillard,
- une première déshydratation par détente brusque du mélange avec mise à l'air libre,
- une compression suivie d'un second broyage et malaxage du mélange associés à une cuisson complémentaire dudit mélange à une température comprise entre 100°C et 140°C pour l'obtention de la pâte mère d'amande,
- une seconde déshydratation par détente brusque de la pâte mère d'amande avec mise à l'air libre associée à un refroidissement pour abaisser la température de la pâte mère d'amande à une température inférieure à 100°C,
- une introduction en continu des produits d'addition,
- un mélange de la pâte mère d'amande et des produits d'addition associé à un refroidissement progressif à une température comprise entre 20°C et 30°C pour l'obtention de la pâte d'amande.
- et une extrusion de la pâte d'amande par au moins une filière placée à l'extrémité aval du transporteur à vis.

Selon une autre caractéristique de l'invention, les produits d'addition sont constitués notamment par du sirop de glucose, du sorbitol et un complément de saccharose sous forme de sucre glace.

- la Figure 1 est une vue en coupe par un plan vertical passant par l'axe d'une vis du dispositif utilisé pour la mise en oeuvre du procédé,
- la Figure 2 est une vue en coupe selon la ligne 2-2 de la figure 1.
- la Figure 3 est une vue en coupe par un plan vertical passant par l'axe d'une vis d'une variante de réalisation du dispositif.

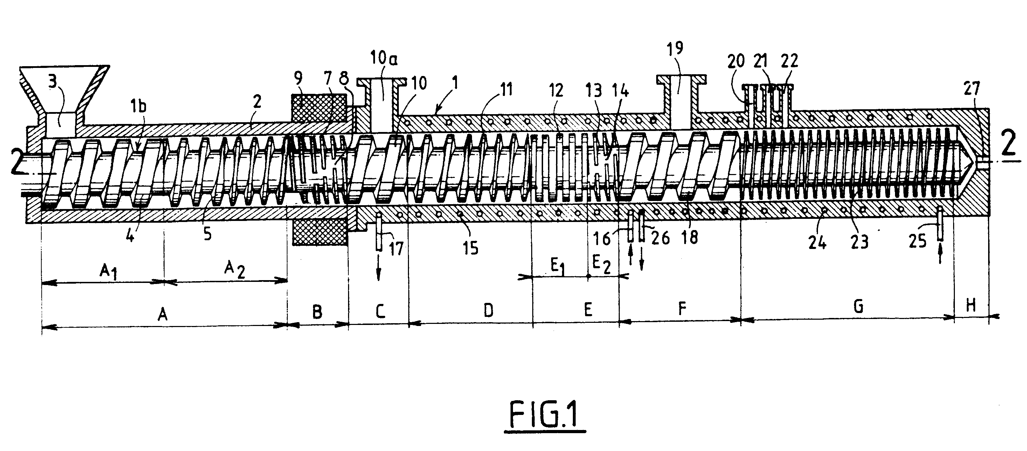

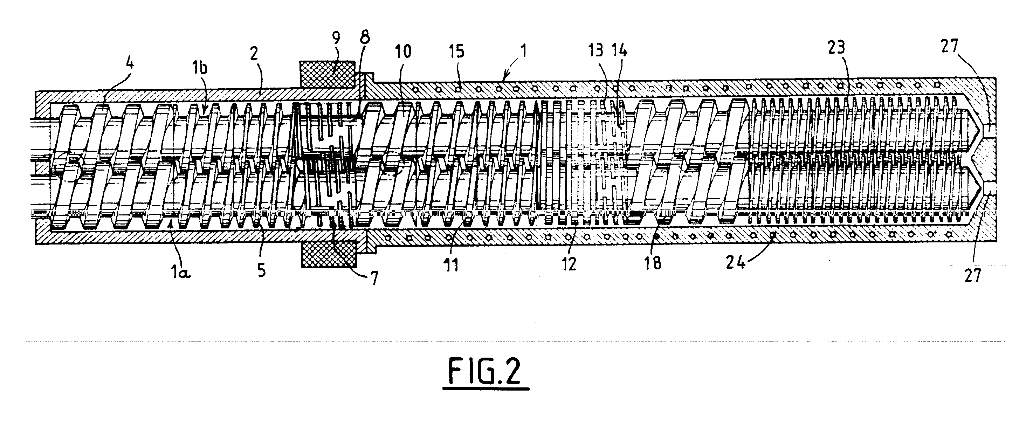

Le dispositif utilisé pour la mise en oeuvre du procédé, représenté schématiquement sur les figures 1 et 2, est constitué par un transporteur à vis 1 comprenant, d'une façon générale, au moins deux vis 1a et 1b entraînées en rotation autour de leurs axes à l'intérieur d'une enceinte allongée formant un fourreau 2 qui les enveloppe.

Comme on le voit sur la figure 2, les vis 1a et 1b sont munies de filets ou autres organes périphériques qui engrènent l'un dans l'autre et la paroi interne du fourreau 2 forme deux lobes cylindriques sécents, de diamètre intérieur légèrement supérieur au diamère extérieur des filets ou des organes périphériques. Ces filets sont imbriqués les uns dans les autres et, dans l'exemple représenté, les deux vis 1a et 1b sont entraînées en rotation dans le même sens de telle sorte que les filets sont identiques et simplement décalés l'un par rapport à l'autre.

Le transporteur à vis 1 est constitué de plusieurs zones successives correspondant chacune à une fonction particulière :

- une première zone A d'alimentation et de mélange des ingrédients de départ,
- une deuxième zone B de malaxage du mélange avec chauffage à une température déterminée,
- une troisième zone C de déshydratation du mélange,
- une quatrième zone D de compression progressive du mélange associée à une cuisson,
- une cinquième zone E de broyage et de malaxage jusqu'à l'obtention de la pâte mère d'amande,
- une sixième zone F de déshydratation secondaire de la pâte avec refroidissement,
- une septième zone G d'incorporation des additifs etde mélange associés à un refroidissement pour l'obtention de la pâte d'amande,
- et une dernière zone H d'extrusion du produit final.

Les vis 1a et 1b sont constituées avantageusement d'arbres cannelés sur lesquels sont empilés des tronçons de vis constitués de manchons dont la partie intérieure est munie de cannelures correspondant à celles de l'arbre et dont la partie extérieure est munie de filets à pas variés ou autres organes périphériques de traitement et de transport. On peut disposer d'un assez grand nombre de tronçons permettant de faire varier le pas, la profondeur et le nombre des filets ainsi que la longueur de chaque zone.

Dans la première zone A d'alimentation et de mélange des ingrédients, le fourreau 2 est muni d'un orifice 3 d'introduction, à l'aide d'un doseur non représenté, des amandes entières émondées, de saccharose, et d'une certaine quantité d'eau. Dans la première section A1, les vis 1a et 1b sont munies de filets 4 à pas large qui transportent rapidement la matière introduite par l'orifice 3, celui-ci s'ouvrant largement sur les deux vis pour faciliter la répartition de la matière dans les filets.

Les ingrédients sont donc immédiatement transportés vers l'aval et mélangés par l'effet de rotation et d'engrènement des vis 1a et 1b, cet effet de mélange étant amplifié par l'utilisation d'une section A2 de compression munie de filets 5 à pas resserré.

Le saccharose introduit par l'orifice 3 en même temps que les amandes émondées et l'eau est généralement présenté sous la forme du sucre cristallisé, cette forme étant préférée à celle du sucre glace qui pourrait être équivalente, mais qui a pour inconvénient de provoquer des agglomérats dans la trémie d'amenée des produits.

La quantité d'eau introduite est influencée par la capacité d'absorption d'eau des amandes, qui résulte directement du rapport entre les matières grasses et les protéines.

Ensuite, le mélange passe dans une zone B de malaxage.

A cet effet, la zone B est munie de filets 7 à pas inversé dans lesquels sont ménagées des ouvertures 8 qui s'étendent radialement depuis l'arbre de chaque vis 1a et 1b jusqu'à la périphérie du filet et sont en outre réparties régulièrement autour de l'axe. Les vis 1a et 1b sont calées de façon que deux ouvertures 8 viennent en coïncidence périodiquement dans la zone centrale d'engrènement. On contrôle de la sorte le passage d'un débit contrôlé de matière vers l'aval, ce qui détermine un freinage dans la zone B et de ce fait une compression en amont et il en résulte un effet de malaxage intense qui favorise le mélange des ingrédients.

Dans cette zone B, le fourreau 2 est entouré par un manchon de chauffage 9 qui peut être par exemple un organe de chauffage électrique par induction. De ce fait, les ingrédients mélangés dont la température a déjà été augmentée dans la zone A2 par l'effet des frottements, peuvent être chauffés jusqu'à une température déterminée. Ainsi, le produit mélangé qui est à une température de l'ordre de 60 à 90°C dans la zone A2 est porté à une température d'environ 140-170°C dans la zone B où se produisent les réactions biochimiques de Maillard développant ainsi le goût du produit.

A la sortie de la zone B, le produit mélangé ainsi réalisé passe alors dans une zone C dite aussi zone de détente. Dans cette zone C de détente brusque, les vis 1a et 1b comportent des filets 10 à pas large communiquant à l'air libre par une ouverture 10a ménagée dans le fourreau 2. Cette détente a pour but de provoquer la déshydratation partielle nécessaire du mélange avant une nouvelle étape de cisaillement et de malaxage.

Le mélange passe ensuite dans la zone D où les vis 1a et 1b sont munies de filets 11 à pas direct, ce dernier se resserrant vers l'aval pour créer une zone de compression.

Ensuite, le mélange passe dans une zone E de broyage et de malaxage.

Pour cela, la zone E comporte une première section E1 de broyage formée de disques malaxeurs 12 excentrés qui permettent un passage vers l'aval du mélange avec effet de laminage entre les disques 12 et le fourreau 2. Le nombre de disques malaxeurs 12 est fonction du degré de finesse de la matière à obtenir. La section E1 est suivie d'une section E2 munie de filets 13 à pas inversé dans lesquels sont ménagées des ouvertures 14 régulièrement réparties autour de l'axe.

Au niveau des zones D et E, le fourreau 2 est muni d'un circuit de chauffage 15 constitué de canaux ménagés à l'intérieur dudit fourreau 2 et parcourus par un fluide caloporteur circulant entre un orifice d'introduction 16 et un orifice d'évacuation 17. Ce circuit de chauffage 15 permet de maintenir le mélange dans les zones D et E à une température comprise entre 100°C et 140°C.

C'est lors de cette étape de broyage et de cisaillage dans la zone E qu'est élaborée la pâte mère d'amande.

A la sortie de la zone E, la pâte ainsi réalisée est introduite dans une zone F où elle subit une nouvelle déshydratation par détente brusque, ce qui abaisse la quantité d'eau contenue dans ladite pâte. Dans cette zone F de détente brusque, les vis 1a et 1b comportent des filets 18 à pas large communiquant à l'air libre par une ouverture 19 ménagée dans le fourreau 2.

Les filets 18 à pas large permettent un entraînement en couche mince vers l'aval avec un effet de retournement de la pâte d'une vis à l'autre dans la zone d'engrènement.

La pâte est ainsi transportée dans la zone G de mélange final, au début de laquelle, on peut introduire par des petites ouvertures 20, 21 et 22 différents additifs nécessaires à l'obtention de la pâte d'amande après mélange dans la zone G. A cet effet, les vis 1a et 1b sont munies dans la zone G de filets 23 à pas constant et étroit pour obtenir le mélange désiré entre la pâte et les différents additifs.

Par ailleurs, le fourreau 2 comporte au niveau des zones F et G, un circuit de refroidissement 24 constitué de canaux ménagés à l'intérieur dudit fourreau et parcourus par un fluide caloporteur circulant entre un orifice d'introduction 25 et un orifice d'évacuation 26. Ce circuit de refroidissement permet d'abaisser progressivement la température de la pâte jusqu'à une température comprise entre 20° C et 30° C.

L'un des additifs introduits peut, par exemple être du sirop de glucose qui agit sur la rétention d'humidité, sur la prévention de la cristallisation du saccharose introduit en début d'opération et enfin qui a un rôle dans les propriétés rhéologiques du produit final, notamment la viscosité, la fluidité et la plasticité.

Un autre additif constitué par du sorbitol permet de contrôler la plasticité et la fluidité, mais il est principalement utilisé pour augmenter la pression osmotique de la phase liquide ce qui améliore la stabilité bactériologique de la pâte d'amande et réduit sa tendance au séchage.

Enfin, un complément de saccharose sous la forme de sucre glace peut être introduit dans le but d'améliorer les propriétés rhéologiques, et d'obtenir la formule finale du produit tel que désiré.

La zone G à pas resserré permet donc de mélanger la pâte et les additifs pour l'obtention de la pâte d'amande et d'élever la pression pour réaliser dans la zone H une extrusion par une filière 27 placée à l'extrémité aval du fourreau 2. La filière 27 permet de donner la forme que l'on désire au produit qui est extrudé par exemple sous la forme d'un ou plusieurs boudins coupés en éléments par un dispositif de coupe, non représenté, placé sur la face aval du fourreau 2.

Comme indiqué précédemment, pour réaliser les réactions biochimiques de Maillard, le mélange doit être chauffé à une température comprise entre 140° et 170°C, cependant, ces réactions ne doivent pas se poursuivre pendant toute la phase de préparation dans le transporteur à vis car il pourrait alors en résulter une altération du goût de la pâte d'amande obtenue et une coloration brune impropre à son utilisation en confiserie, c'est la raison pour laquelle la pâte d'amande est refroidie dans les zones F et G du transporteur à vis pour stopper les réactions de Maillard et pour obtenir un produit qui en sortie de la filière d'extrusion ait une consistance suffisante permettant sa manutention.

Bien entendu, les conditions de traitement seront déterminées en fonction des ingrédients de départ et du produit que l'on désire réaliser.

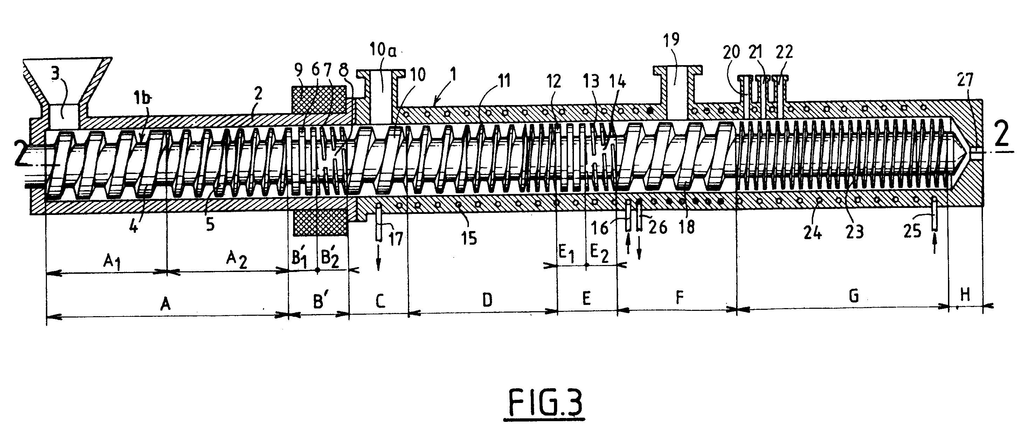

En effet, dans la variante représentée à la figure 3 où les éléments correspondant à des éléments analogues des figures 1 et 2 portent les mêmes repères, la zone B de malaxage est remplacée par une zone B' de broyage et de malaxage.

Pour cela, la zone B' comporte une première section B'$_1$ de broyage constitué de disques malaxeurs 6 excentrés qui permettent un passage vers l'aval du mélange avec un effet de laminage entre les disques 6 et le fourreau 2. Le nombre de disques malaxeurs 6 est fonction du degré de finesse de la matière à obtenir. La première section B'$_1$ est suivie d'une seconde section B'$_2$ munie de filets 7 à pas inversé dans lesquels sont ménagées des ouvertures 8.

Par ailleurs, la zone E de broyage et de malaxage comporte une première section E$_1$ de broyage formée de disques malaxeurs 12 suivie d'une section E$_2$ munie de filets 13 à pas inversé dans lesquels sont ménagées des ouvertures 14. Mais dans cette variante, le nombre de disques malaxeurs 12 composant la section E$_1$ est moins important que dans l'exemple précédent, et la zone D comporte un plus grand nombre de filets à pas direct.

On voit donc que le procédé selon l'invention permet de réaliser de façon continue et en un temps très court une pâte d'amande à partir d'amandes entières émondées, et l'adjonction de tout type d'additifs et ce à tous les niveaux du procédé de fabrication.

Par ailleurs, en raison de l'élévation de température importante réalisée sous pression dans le transporteur à vis, on obtient un effet de stérilisation qui est conservé jusqu'à la sortie de la machine si, du moins, les matières d'addition introduites sont elles-mêmes stérilisées.

**Revendications**

1. Procédé de préparation de pâte d'amande à partir d'amandes entières émondées mélangées avec des glucides et divers additifs, dans lequel l'ensemble de la préparation est réalisé par cuisson-extrusion à l'intérieur d'un transporteur à vis (1) en plusieurs étapes se succédant en continu et comprenant, de l'amont à l'aval dans le sens de transport, un mélange, une cuisson, une déshydratation et une extrusion, caractérisé en ce que les étapes comprennent :
   - une introduction des amandes entières émondées, du saccharose associés à une certaine quantité d'eau, et un mélange des produits introduits,
   - un premier broyage et malaxage du mélange avec une cuisson dudit mélange à une température comprise entre 140°C et 170°C permettant le développement des réactions biochimiques de Maillard,

- une première déshydratation par détente brusque du mélange avec mise à l'air libre,

- une compression suivie d'un second broyage et malaxage du mélange associés à une cuisson complémentaire dudit mélange à une température comprise entre 100°C et 140°C pour l'obtention de la pâte mère d'amande,

- une seconde déshydratation par détente brusque de la pâte mère d'amande avec mise à l'air libre associée à un refroidissement pour abaisser la température de la pâte mère d'amande à une température inférieure à 100°C,

- une introduction en continu des produits d'addition,

- un mélange de la pâte mère d'amande et des produits d'addition associé à un refroidissement progressif à une température comprise entre 20°C et 30°C pour l'obtention de la pâte d'amande.

- et une extrusion de la pâte d'amande par au moins une filière (27) placée à l'extrémité aval du transporteur à vis (1).

2. Procédé selon la revendication 1, caractérisé en ce que les produits d'addition sont constitués notamment par du sirop de glucose, du sorbitol et un complément de saccharose sous forme de sucre glace.

## Claims

1. A process for preparing almond paste from blanched, whole almonds mixed with sugars and various additives, the whole of the preparation being carried out by cooking-extrusion within a screw conveyor (1) in a plurality of stages following on continuously from one another and comprising, in the downstream direction of conveyance, mixing, cooking, dehydration and extrusion, characterised in that these stages comprise:

- introduction of the blanched, whole almonds and saccharose combined with a quantity of water, and mixing of the products introduced,

- initial grinding and kneading of the mixture with cooking of said mixture at a temperature between 140°C and 170°C, permitting the biochemical Maillard reactions,

- initial dehydration by sudden expansion of the mixture with exposure to free air,

- compression followed by secondary grinding and kneading of the mixture combined with complementary cooking of said mixture at a temperature between 100°C and 140°C in order to obtain mother almond paste,

- secondary dehydration by sudden expansion of the mother almond paste with exposure to free air, combined with cooling to lower the temperature of the mother almond paste to a temperature lower than 100°C,

- continuous introduction of the additives,

- mixing of the mother almond paste with the additives, combined with progressive cooling to a temperature between 20°C and 30°C in order to obtain almond paste,

- and extrusion of the almond paste through at least one die (27) located at the downstream end of the screw conveyer (1).

2. Process according to claim 1, characterised in that the additives consist in particular of glucose syrup, sorbitol and a complement of saccharose in the form of icing sugar.

## Patentansprüche

1. Verfahren zur Herstellung von Marzipan, ausgehend von ganzen geschälten, mit Zuckern und verschiedenen Zusatzstoffen gemischten Mandeln, bei dem die gesamte Herstellung durch Kochen-Extrusion im Inneren einer Förderschnecke (1) in mehreren kontinuierlich aufeinanderfolgenden Schritten durchgeführt wird und das, von stromauf nach stromab in Förderrichtung gesehen, einen Mischvorgang, einen Erhitzungsvorgang, einen Entwässerungsvorgang und eine Extrusion beinhaltet, **dadurch gekennzeichnet,** daß die Schritte umfassen:

- Eine Einführung der ganzen geschälten Mandeln und von Saccharose zusammen mit einer bestimmten Wassermenge und Mischen der aufgegebenen Stoffe,

- eine erste Zerkleinerung und ein erstes Verkneten des Gemisches, wobei das Gemisch auf eine Temperatur zwischen 140°C und 170°C erhitzt wird, was das Auftreten der biochemischen Maillard-Reaktionen erlaubt,

- eine erste Entwässerung durch abrupte Entspannung des Gemisches, wobei dieses der freien Luft ausgesetzt wird,

- eine Kompression, der eine zweite Zerkleinerung und ein zweites Verkneten des Gemisches, verbunden mit einem zusätzlichen Erhitzen des Gemisches auf eine Temperatur zwischen 100 und 140°C folgen, wobei die Rohmarzipanmasse erhalten wird,

- eine zweite Entwässerung durch abrupte Entspannung der Rohmarzipanmasse, wobei diese der freien Luft ausgesetzt wird, verbunden mit einem Abkühlen zum Absenken der Temperatur der Rohmarzipanmasse auf eine Temperatur unter 100°C,

- kontinuierliche Einführung der Zusatzstoffe,

- ein Mischen der Rohmarzipanmasse und der Zusatzstoffe, verbunden mit einer fortschreitenden Abkühlung auf eine Temperatur zwischen 20 und 30°C, wobei das Marzipan erhalten wird, und

- eine Extrusion des Marzipans durch mindestens eine Düse (27), die sich am unterstromigen Ende der Förderschnecke (1) befindet.

2. Verfahren nach Anspruch 1, dadurch gekennzeichnet, daß die Zusatzstoffe insbesondere aus Glucosesirup, Sorbit und einem Saccharosezusatz in Form von Puderzucker bestehen.

FIG.1

FIG.2

EP 0 247 926 B1

FIG.3

EP 0 247 926 B1